# EUROPÄISCHE PATENTSCHRIFT

(11) **EP 2 956 320 B1**
(45) Veröffentlichungstag und Bekanntmachung des Hinweises auf die Patenterteilung: **11.04.2018**
(21) Anmeldenummer: 14707320.9
(22) Anmeldetag: 13.02.2014
(51) Int. Cl.: B60G 21/055

(54) **FAHRZEUGAUFBAU UND DREHSTABSYSTEM FÜR EINE FAHRZEUGACHSE EINES ZWEISPURIGEN FAHRZEUGES**
VEHICLE BODY AND TORSION BAR SYSTEM FOR A VEHICLE AXLE OF A TWO-TRACK VEHICLE
CARROSSERIE DE VEHICULE ET SYSTÈME DE BARRE DE TORSION DESTINÉ À UN ESSIEU D'UN VÉHICULE À DEUX VOIES

(30) Priorität: 16.02.2013 DE 102013002704
(43) Veröffentlichungstag der Anmeldung: 23.12.2015
(73) Patentinhaber: Audi AG, 85045 Ingolstadt (DE)
(72) Erfinder: SCHMITT, Joachim, 85051 Ingolstadt (DE); SCHINDLER, Andreas, 85055 Ingolstadt (DE); ISAKIEWITSCH, Christian, 85051 Ingolstadt (DE)
(74) Vertreter: Reichert, Thomas Klaus
(86) Internationale Anmeldenummer: PCT/EP2014/000390
(87) Internationale Veröffentlichungsnummer: WO 2014/124752

(56) Entgegenhaltungen:
- EP-A1- 1 686 042
- EP-A1- 2 517 905
- EP-A2- 1 364 816
- EP-A2- 2 093 131
- WO-A1-96/00661
- DE-A1-102006 004 960
- DE-A1-102009 005 895
- JP-A- H07 266 836
- US-B1- 7 234 713

## Beschreibung

Die Erfindung betrifft einen Fahrzeugaufbau und ein Drehstabsystem für eine Fahrzeugachse, insbesondere eine Hinterachse, eines zweispurigen Fahrzeuges nach dem Oberbegriff des Patentanspruches 1.
Ein solches Drehstabsystem wird bei einer aktiven Fahrwerksregelung eingesetzt, bei der jeder Radaufhängung der Hinterachse jeweils ein Drehaktuator zugeordnet ist. Mit den beiden Drehaktuatoren der Fahrzeugachse können je nach Ansteuerung das Fahrzeugniveau verändert und/oder Nick- und Wankbewegungen des Fahrzeuges ausgeglichen werden.
Aus der DE 10 2009 005 895 A1 ist ein gattungsgemäßes Drehstabsystem mit einem zweiteilig ausgeführten Stabilisator bekannt. Das Drehstabsystem weist einen ersten Drehaktuator und einen zweiten Drehaktuator auf, die jeweils einer Fahrzeugseite zugeordnet sind. Jeder der Drehaktuatoren weist eine Motor-Getriebe-Einheit auf, mit der Drehmomente erzeugt und über einen Torsionsstab sowie einen Abtriebshebel als Stellkräfte auf ein Radaufhängungselement der Fahrzeugachse übertragen werden. Die Motor-Getriebe-Einheiten der beiden Drehaktuatoren sind in einem gemeinsamen Gehäuse angeordnet, das über eine Tragkonsole mittig an einem Querträger eines rahmenförmigen Achsträgers beziehungsweise eines Hilfsrahmens drehfest montiert ist. Der Hilfsrahmen ist wiederum in an sich bekannter Weise an Karosserie-Längsträger des Fahrzeugaufbaus anbindbar.

Speziell bei einer angetriebenen Hinterachse kann zwischen den Längs- und Querträgern des Hilfsrahmens ein Getriebeaggregat und/oder ein Elektromotor gelagert sein, der über Gelenkwellen in Antriebsverbindung mit den Hinterrädern ist. Im Fahrbetrieb werden von solchen Antriebskomponenten Betriebskräfte in den Hilfsrahmen eingeleitet. Für eine zuverlässige Aufnahme dieser Betriebskräfte ist der Hilfsrahmen konstruktiv aufwendig sowie mit hohem Materialaufwand ausreichend bauteilsteif auszulegen.

Das Dokument EP 2 517 905 A1 offenbart einen Fahrzeugaufbau und ein Drehstabsystem nach dem Oberbegriff des Anspruchs 1.

Die Aufgabe der Erfindung besteht darin, ein Drehstabsystem für eine Fahrzeugachse bereitzustellen, bei der trotz ausreichender Bauteilsteifigkeit der Material- und Konstruktionsaufwand vereinfacht ist.
Die Aufgabe ist durch die Merkmale des Patentanspruches 1 gelöst. Bevorzugte Weiterbildungen der Erfindung sind in den Unteransprüchen offenbart.
Die Erfindung beruht auf dem Grundgedanken, dass das an der Fahrzeugachse angebaute Drehstabsystem derart angepasst wird, dass die Bauteilsteifigkeit des Hilfsrahmens ohne Einsatz zusätzlicher Versteifungselemente beziehungsweise zusätzlichem Materialeinsatz erhöht werden kann. Vor diesem Hintergrund ist gemäß dem kennzeichnenden Teil des Patentanspruches 1 das gemeinsame Gehäuse für die beiden Motor-Getriebe-Einheiten der Drehaktuatoren über zwei Anbindungsstellen drehfest am Fahrzeugaufbau montiert, die über einen Lagerabstand voneinander beabstandet sind. Das gemeinsame Gehäuse bildet somit im Fahrbetrieb einen zusätzlichen Lastpfad. Über diesen zusätzlichen Lastpfad können Betriebskräfte weitergeleitet werden und kann daher der Fahrzeugaufbau im Bereich des gemeinsamen Gehäuses kräftemäßig entlastet werden.

Wie bereits oben angedeutet, weist der Fahrzeugaufbau an zum Beispiel der Hinterachse einen Hilfsrahmen mit einem vorderen und einen hinteren Querträger auf, die jeweils über seitliche Längsträger miteinander verbunden sind. Auf diese Weise ergibt sich ein geschlossener Rahmen, in dem zum Beispiel ein Hinterachs-Differenzial und/oder ein Elektromotor gelagert ist. Zur Reduzierung der Gesamtfederrate des Fahrzeuges kann das Drehstabsystem zusätzlich Torsionsfederelemente aufweisen. Auf diese Weise können in der Motor-Getriebe-Einheit erzeugten Drehmomente über den Lastpfad Motor-Getriebe-Einheit/Torsionsfederelement/Abstriebshebel/Radaufhängungselement letztlich als lineare Stellkräfte auf das Fahrzeugrad übertragen werden. In einer besonders kompakten Anordnung können die beiden Torsionsfederelemente innerhalb des gemeinsamen Gehäuses angeordnet sein. Das gemeinsame Gehäuse kann in diesem Fall in der Fahrzeugquerrichtung einander gegenüberliegende seitliche Lageröffnungen aufweisen, aus denen jeweils der Abtriebshebel herausgeführt ist. Die Lageröffnungen des gemeinsamen Gehäuses sind insbesondere Drehlagerstellen, die eine Drehachse des Drehstabsystems definieren.

Der vordere Querträger und/oder die beiden Längsträger des Hilfsrahmens können bevorzugt Lagerstellen aufweisen, an die das gemeinsame Gehäuse mit seinen beiden Anbindungsstellen befestigbar ist.

Bei einer angetriebenen Fahrzeugachse ist eine Antriebskomponente, etwa ein Hinterachs-Differenzial oder ein Elektromotor, unmittelbar an dem vorderen Querträger des Hilfsrahmens angebunden, in den während des Fahrbetriebs verstärkt Betriebskräfte eingeleitet werden. Bevorzugt ist das gemeinsame Gehäuse speziell an diesem Querträger angebunden. Der Querträger, an dem die Antriebskomponente montiert ist, stellt somit einen ersten Lastpfad bereit, über den die Betriebskräfte von der Antriebskomponente in die Hilfsrahmen-Längsträger eingeleitet werden. Mit Hilfe des gemeinsamen Gehäuses wird ein zweiter Lastpfad bereitgestellt, über den ebenfalls die Betriebskräfte in die Längsträger eingeleitet werden können. Auf diese Weise wird der Querträger kräftemäßig entlastet. Erfindungsgemäß ist es dabei, wenn die Anbindungsstelle für die Antriebskomponente in der Fahrzeugquerrichtung zwischen den beiden Anbindungsstellen des gemeinsamen Gehäuses angeordnet ist.
Das gemeinsame Gehäuse kann bevorzugt hohlzylindrisch gestaltet sein, wobei die Gehäuseachse koaxial zur Drehachse des Drehstabsystems liegen kann. Zudem kann das gemeinsame Gehäuse spiegelsymmetrisch zu einer vertikalen Fahrzeugmittellängsebene angeordnet sein.
In einer Ausführungsform können die beiden Motor-Getriebe-Einheiten spiegelsymmetrisch zur obigen Längsebene in etwa in der Fahrzeugmitte drehfest und bauteilsteif im gemeinsamen Gehäuse angeordnet sein. Die beiden Motor-Getriebe-Einheiten können unter Zwischenschaltung der torsionsweichen Torsionsfederelemente mit jeweils dem torsionssteifen Abtriebshebel verbunden sein, der über eine seitliche Gehäuseöffnung bis zum Radaufhängungselement geführt ist. Zur Reduzierung des Bauraumbedarfes ist es von Vorteil, wenn das Torsionsfederelement kein langgestreckter Torsionsstab ist, sondern vielmehr eine kompakte Rotationsfeder.
In einer alternativen Ausführungsform können die Positionen der Motor-Getriebe-Einheit und des Torsionsfederelementes getauscht werden. In diesem Fall ist die jeweilige Motor-Getriebe-Einheit über das Torsionsfederelement drehweich am gemeinsamen Gehäuse angebunden. Der Abtriebshebel ist daher nicht unmittelbar mit dem Torsionsfederelement in Verbindung, sondern vielmehr drehsteif mit einem Ausgangselement der Motor-Getriebe-Einheit verbunden.

Die jeweilige Motor-Getriebe-Einheit kann beispielhaft aus einem Elektromotor mit einem Untersetzungsgetriebe (zum Beispiel einem Harmonic-Drive-Getriebe) zusammengesetzt sein. Alternativ dazu kann anstelle des Elektromotors auch ein Hydraulikmotor eingesetzt werden. Erfindungsgemäß ist das gemeinsame Gehäuse in der Vertikalrichtung fluchtend unterhalb des Querträgers des Hilfsrahmens angeordnet. Auf diese Weise ergibt sich ein besonders bauteilsteifer Doppelträger, bestehend aus dem Querträger und dem gemeinsamen Gehäuse, der eine besonders bauteilsteife Anbindung zum Beispiel eines Hinterachsdifferenzials an dem Querträger ermöglicht.
Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.
Die Erfindung und ihre vorteilhaften Aus- und/oder Weiterbildungen sowie deren Vorteile werden nachfolgend anhand von Zeichnungen näher erläutert.
Es zeigen:
- Fig. 1: in einer Ansicht von unten eine angetriebene Fahrzeug-Hinterachse mit einem Drehstabsystem;
- Fig. 2: in einer teilweisen Schnittdarstellung sowie in Alleinstellung das Drehstabsystem für die Hinterachse;
- Fig. 3: ein Ersatzschaltbild der in der Fig. 1 gezeigten Hinterachse; und
- Fig. 4: in einer schematischen Ansicht von vorne eine Hälfte der Hinterachse.

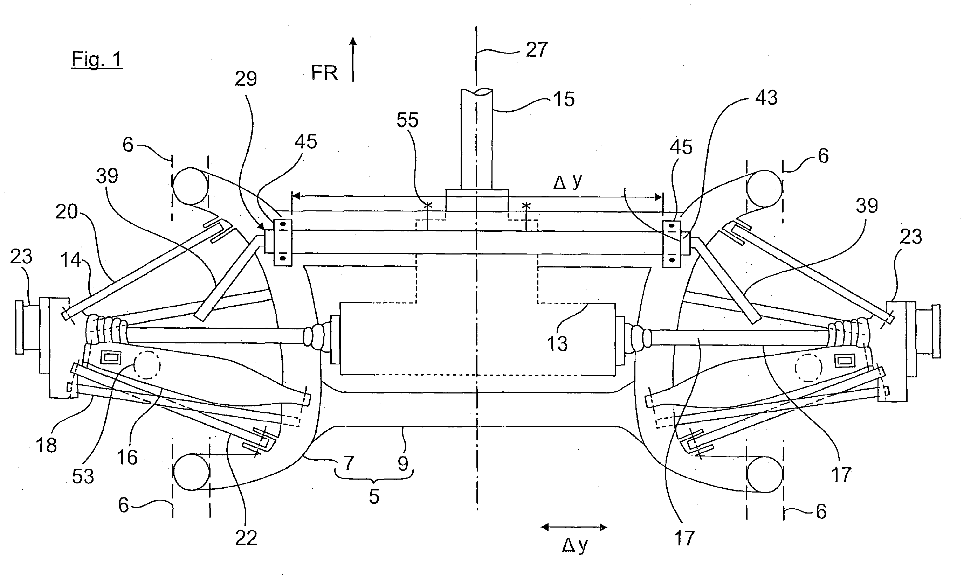

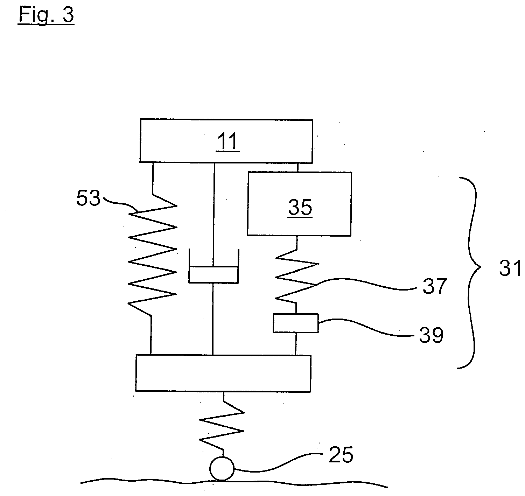

In der Fig. 1 ist in einer Ansicht von unten eine angetriebene Hinterachse für ein Kraftfahrzeug dargestellt, die nur insoweit gezeigt ist, als es für das Verständnis der Erfindung erforderlich ist. Die Hinterachse 1 weist einen Hilfsrahmen 5 auf, der aus Längsträgern 7 sowie aus vorderen und hinteren Querträgern 9 aufgebaut ist. Der Hilfsrahmen 5 ist in an sich bekannter Weise an nur gestrichelt angedeutete Karosserie-Längsträger 6 des Fahrzeugaufbaus 11 (nur in dem Ersatzmodell der Fig. 3 angedeutet) angebunden. Der Hilfsrahmen 5 trägt ein nur gestrichelt angedeutetes Hinterachse-Differenzial 13, das über eine teilweise gezeigte Kardanwelle 15 mit einem Vorderachs-Antrieb des Fahrzeuges in Verbindung ist. Das Hinterachs-Differenzial 13 ist über Gelenkwellen 17 in Antriebsverbindung mit nicht dargestellten Hinterrädern des Fahrzeuges.

An den beiden Längsträgern 7 des Hilfsrahmens 5 sind für die Radaufhängung an den beiden Fahrzeugseiten jeweils untere Lenker 14, 16, 18 sowie obere Lenker 20, 22 in räumlich versetzter Anordnung über nicht dargestellte Lenkerlager angelenkt. Die Lenker 14 bis 22 erstrecken sich in der Fahrzeugquerrichtung y nach außen bis zu den jeweiligen Radträgern 23, die jeweils ein rechtes/linkes Hinterrad 25 (nur in der Fig. 3 angedeutet) des Kraftfahrzeuges trägt. Der oben beschriebene Aufbau der Hinterachse ist mit Bezug auf eine vertikale Fahrzeugmittellängsebene 27 spiegelsymmetrisch ausgeführt.

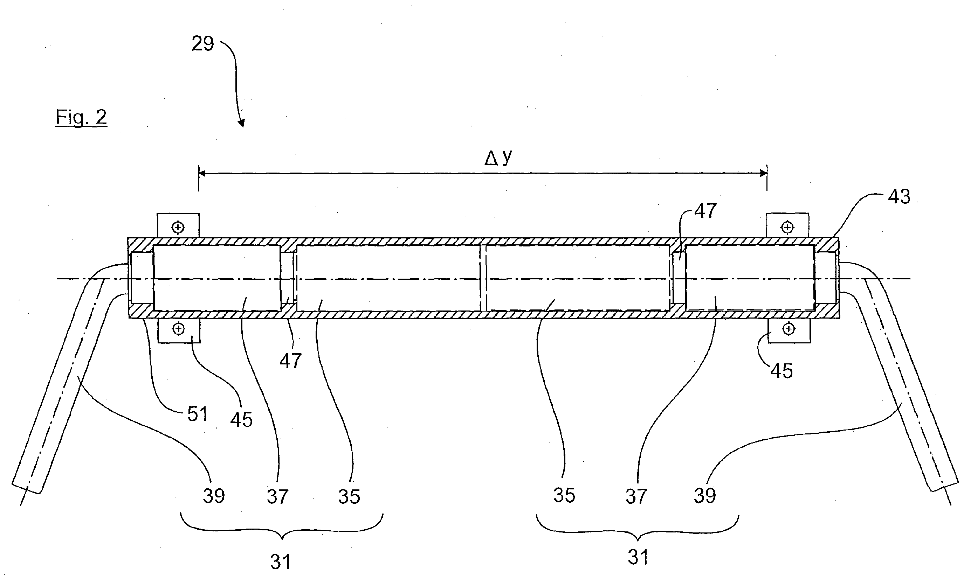

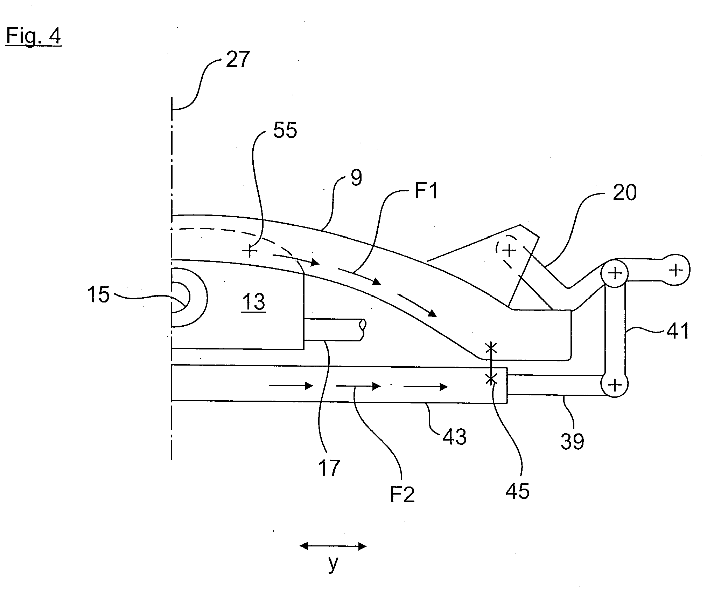

Wie aus der Fig. 1 weiter hervorgeht, weist die Hinterachse 1 ein Drehstabsystem 29 für eine aktive Fahrwerksregelung auf. Gemäß der Fig. 3 weist das Drehstabsystem 29 für jede Fahrzeugseite einen Drehaktuator 31 auf. Jeder der Drehaktuatoren 31 ist durch eine Motor-Getriebe-Einheit 35, einem Torsionsfederelement 37 und einem Abtriebshebel 39 aufgebaut. Der Abtriebshebel 39 ist gemäß der Fig. 4 über eine Koppelstange 41 in Gelenkverbindung mit dem oberen Hebel 20. Gemäß der Fig. 2 sind die Komponenten des Drehstabsystems 29, mit Ausnahme der torsionssteifen Abtriebshebel 39, innerhalb eines gemeinsamen Gehäuses 43 angeordnet. Das Gehäuse 43 ist über Lagerkonsolen 45 an der Unterseite des Hilfsrahmens montiert, und zwar unmittelbar unterhalb des vorderen Hilfsrahmen-Querträgers 9. Das gemeinsame Gehäuse 43 sowie die beiden Lagerkonsolen 45 sind jeweils spiegelsymmetrisch zur Fahrzeuglängsmittelebene 27 angeordnet, wobei die beiden Lagerkonsolen 45 über einen Lagerabstand Δy voneinander beabstandet sind, und in etwa an vorderen Eckknoten des Hilfsrahmens 5 positioniert sind.
Gemäß der Fig. 2 sind die beiden Motor-Getriebe-Einheiten 35 jeweils drehfest innerhalb des gemeinsamen Gehäuses 43 montiert. Jeder der Motor-Getriebe-Einheiten 35 ist über eine in einem Lager 47 drehgelagerte Ausgangswelle mit dem Torsionsfederelement 37 (das heißt eine Rotationsfeder) verbunden, die ausgangsseitig am Abtriebshebel 39 angebunden ist. Dieser ist wiederum durch eine Gehäuseöffnung 51 drehgelagert nach außen geführt. Die Torsionsfederelemente 37 sowie die beiden Motor-Getriebe-Einheiten sind mit ihren Drehachsen zueinander koaxial in Reihe angeordnet, wodurch der Gesamtdurchmesser des zylindrischen gemeinsamen Gehäuses 43 vergleichsweise gering ist.
In der Fig. 3 ist in einem Ersatzschaltbild das Zusammenwirken des Drehaktuators 31 des Drehstabsystems 29 mit der in der Fig. 1 nur angedeuteten Tragfeder 53 der Radaufhängung der Hinterachse 1 gezeigt. Demzufolge ist zwischen dem Fahrzeugaufbau 11 und dem Hinterrad 25 die Tragfeder 53 und das Torsionsfederelement 37 als parallel geschaltetes Federsystem wirksam, das die Gesamtfederrate des Fahrzeuges bestimmt.

Wie aus der Fig. 1 und der Fig. 4 weiter hervorgeht, ist das Hinterachs-Differenzial 13 an Anbindungsstellen 55 am vorderen Hilfsrahmen-Querträger 9 montiert. Die beiden Anbindungsstellen 55 des Hinterachs-Differenzials 13 befinden sich dabei in der Fahrzeugquerrichtung y betrachtet zwischen den Befestigungskonsolen 45 des gemeinsamen Gehäuses 43.

Im Fahrbetrieb stellt somit der vordere Hilfsrahmen-Querträger 9 einen Lastpfad F1 bereit, über den die Betriebskräfte auf Hilfsrahmen-Längsträger übergeleitet werden. Wie bereits oben erwähnt, ist das gemeinsame Gehäuse 7 unter Bildung von Knotenstellen mit dem vorderen Hilfsrahmen-Querträger 9 verschraubt. Mit Hilfe des so montierten gemeinsamen Gehäuses 43 wird ein zweiter Lastpfad F2 bereitgestellt. Über den zweiten Lastpfad F2 wird unter Reduzierung der Belastung des Hilfsrahmen-Querträgers 9 die Betriebskräfte in die Hilfsrahmen-Längsträger 7 eingeleitet.

## Patentansprüche

1. Fahrzeugaufbau und Drehstabsystem für eine Fahrzeugachse (1), insbesondere Hinterachse, eines zweispurigen Fahrzeugs, mit jeweils einer Fahrzeugseite zugeordneten ersten und zweiten Drehaktuatoren (31) für eine aktive Fahrwerksregelung, von denen jeder Drehaktuator (31) zumindest eine Motor-Getriebe-Einheit (35) aufweist, mit der Drehmomente erzeugbar und über einen Abtriebshebel (39) als Stellkräfte auf ein Radaufhängungselement (20) übertragbar sind, wobei die Motor-Getriebe-Einheiten (35) der beiden Drehaktuatoren (31) in einem gemeinsamen Gehäuse (43) angeordnet sind, das drehfest an dem Fahrzeugaufbau (11) montiert ist, wobei das Gehäuse (43) zur Aussteifung des Fahrzeugaufbaus (11) zumindest zwei Anbindungsstellen (45) aufweist, die über einen Lagerabstand (Δy) voneinander beabstandet sind und über die das Gehäuse (43) bauteilsteif am Fahrzeugaufbau (11) montiert ist, wobei der Fahrzeugaufbau (11) einen Hilfsrahmen (5) aufweist, an dem das gemeinsame Gehäuse (43) montiert ist, wobei der Hilfsrahmen (5) zwei Längsträger (7) aufweist und wobei zur Bildung eines rahmenförmig geschlossenen Hilfsrahmens (5) ein vorderer und ein hinterer Querträger (9) vorgesehen sind, die über die Längsträger (7) miteinander verbunden sind, **dadurch gekennzeichnet, dass** das gemeinsame Gehäuse (43) in der Vertikalrichtung fluchtend unterhalb des vorderen Querträgers (9) des Hilfsrahmens (5) angeordnet ist, und zwar unter Bildung eines Doppelträgers, bei dem das gemeinsame Gehäuse (43) als zusätzliche Quertraverse am Hilfsrahmen (5) montiert ist, und dass der vordere Querträger (9) des Hilfsrahmens (5) eine Anbindungsstelle (55) für eine Antriebskomponente (13) aufweist, und dass die Anbindungsstelle (55) für die Antriebskomponente (13) in der Fahrzeugquerrichtung (y) zwischen den Anbindungsstellen (45) des gemeinsamen Gehäuses (43) angeordnet ist.

2. Fahrzeugaufbau und Drehstabsystem nach Anspruch 1, **dadurch gekennzeichnet, dass** jede der Motor-Getriebe-Einheiten (35) jeweils ein Torsionsfederelement (37) zur Einstellung einer Federrate des Drehstabsystems (29) aufweist, und dass zumindest eines der Torsionsfederelemente (37) innerhalb des gemeinsamen Gehäuses (43) angeordnet sind.

3. Fahrzeugaufbau und Drehstabsystem nach Anspruch 1 oder 2, **dadurch gekennzeichnet, dass** das gemeinsame Gehäuse (43) in der Fahrzeugquerrichtung (y) seitliche Gehäuseöffnungen (51) aufweist, aus denen jeweils einer der Abtriebshebel (39) herausgeführt ist, und dass die Gehäuseöffnungen (51) Drehlagerstellen sind, die eine Drehachse der Abtriebshebel (39) definieren.

4. Fahrzeugaufbau und Drehstabsystem nach einem der vorhergehenden Ansprüche, **dadurch gekennzeichnet, dass** der vordere Querträger (9) und/oder die beiden Längsträger (7) Lagerstellen aufweisen, an die das gemeinsame Gehäuse (43) mit seinen beiden Anbindungsstellen (45) befestigbar ist.

5. Fahrzeugaufbau und Drehstabsystem nach einem der vorhergehenden Ansprüche, **dadurch gekennzeichnet, dass** der vordere Querträger (9) einen ersten Lastpfad (F1) bereitstellt, über den Betriebskräfte in die seitlichen Hilfsrahmen-Längsträger (7) einleitbar sind, und dass das gemeinsame Gehäuse (43) einen zweiten Lastpfad (F2) bereitstellt, über den die Betriebskräfte in die Längsträger (7) einleitbar sind.

## Claims

1. Vehicle body and torsion bar system for a vehicle axis (1), in particular a rear axis of a two-track vehicle with first and second rotary actuators (31) assigned to a vehicle side for active vehicle control, of which each rotary actuator (31) has at least one motor gear unit (35) by means of which torques can be produced and transferred to a wheel suspension element (20) via an output lever (39) as positioning forces, wherein the motor gear units (35) of the two rotary actuators (31) are arranged in a common housing (43) which is mounted in a torque-proof manner on the vehicle body (11), wherein the housing (43) has at least two attachment points (45) for reinforcing the vehicle body (11) which are spaced apart from one another via a bearing distance (Δγ) and via which the housing (43) is mounted on the vehicle body (11) in a component-rigid manner, wherein the vehicle body (11) has a subframe (5) on which the common housing (43) is mounted, wherein the subframe (5) has two longitudinal beams (7) and wherein a front and a rear transverse beam (9) are provided to form a frame-shaped closed subframe (5) which are connected to one another via the longitudinal beams (7), **characterised in that** the common housing (43) is arranged aligned in the vertical direction below the front transverse beam (9) of the subframe (5) and forming a double beam in which the common housing (43) is mounted as an additional transverse beam on the subframe (5) and **in that** the front transverse beam (9) of the subframe (5) has an attachment point (55) for a drive component (13) and **in that** the attachment point (55) for the drive component (13) is arranged in the vehicle transverse direction (y) between the attachment points (45) of the common housing (43).

2. Vehicle body and torsion bar system according to claim 1, **characterised in that** each of the motor gear units (35) has a torsion spring element (37) to set a spring rate of the torsion bar system (29) and **in that** at least one of the torsion spring elements (37) are arranged inside the common housing (43).

3. Vehicle body and torsion bar system according to claim 1 or 2, **characterised in that** the common housing (43) has lateral housing openings (51) in the vehicle transverse direction (y), from which one of the output levers (39) is guided and **in that** the housing openings (51) are rotary bearing points which define a rotary axis of the output levers (39).

4. Vehicle body and torsion bar system according to any one of the preceding claims, **characterised in that** the front transverse beam (9) and/or the two longitudinal beams (7) have bearing points on which the common housing (43) can be fastened with its two attachment points (45).

5. Vehicle body and torsion bar system according to any one of the preceding claims, **characterised in that** the front transverse beam (9) provides a first load path (F1) via which operating forces can be introduced into the lateral subframe longitudinal beams (7) and **in that** the common housing (43) provides a second load path (F2) via which the operating forces can be introduced into the longitudinal beams (7).

## Revendications

1. Carrosserie de véhicule et système de barre de torsion pour un essieu de véhicule (1), en particulier un essieu arrière, d'un véhicule à essieu, avec des premiers et deuxièmes actionneurs rotatifs (31) qui sont associés chacun à un côté de véhicule et destinés à un réglage actif de châssis et parmi lesquels chaque actionneur rotatif (31) comporte au moins une unité moteur-transmission (35) avec laquelle des couples peuvent être produits et transmis par l'intermédiaire d'un levier de sortie (39) à un élément de suspension de roue (20) comme forces de réglage, dans lesquels les unités moteur-transmission (35) des deux actionneurs rotatifs (31) sont agencées dans un carter commun (43) qui est monté, solidaire en rotation, sur la carrosserie de véhicule (11), dans lesquels, afin de rigidifier la carrosserie de véhicule (11), le carter (43) comporte au moins deux points d'attache (45) qui sont à une certaine distance l'un de l'autre par le biais d'une distance de palier (Δy) et par l'intermédiaire desquels le carter (43) est monté comme un élément de construction rigide sur la carrosserie de véhicule (11), dans lesquels la carrosserie de véhicule (11) comporte un faux-châssis (5) sur lequel le carter commun (43) est monté, dans lesquels le faux-châssis (5) comporte deux poutres longitudinales (7) et dans lesquels, pour former un faux-châssis (5) fermé en forme de cadre, il est prévu une poutre transversale avant et une poutre transversale arrière (9) qui sont reliées l'une à l'autre par l'intermédiaire des poutres longitudinales (7), **caractérisés en ce que** le carter commun (43) est agencé de manière à être aligné dans la direction verticale sous la poutre transversale avant (9) du faux-châssis (5) et ce en formant une double poutre telle que le carter commun (43) est monté comme une traverse supplémentaire sur le faux-châssis (5), et **en ce que** la poutre transversale avant (9) du faux-châssis (5) comporte un point d'attache (55) destiné à un composant d'entraînement (13), et **en ce que** le point d'attache (55) destiné au composant d'entraînement (13) est agencé, dans la direction transversale de véhicule (y), entre les points d'attache (45) du carter commun (43).

2. Carrosserie de véhicule et système de barre de torsion selon la revendication 1, **caractérisés en ce que** chacune des unités moteur-transmission (35) comporte un élément de ressort de torsion (37) destiné au réglage d'une raideur de ressort du système de barre de torsion (29) et **en ce qu'**au moins l'un des éléments de ressort de torsion (37) est agencé à l'intérieur du carter commun (43).

3. Carrosserie de véhicule et système de barre de torsion selon la revendication 1 ou 2, **caractérisés en ce que** le carter commun (43) comporte des ouvertures de carter (51) latérales dans la direction transversale de véhicule (y), ouvertures hors desquelles est guidé vers l'extérieur à chaque fois l'un des leviers de sortie (39) et **en ce que** les ouvertures de carter (51) sont des points d'appui de rotation qui définissent un axe de rotation du levier de sortie (39).

4. Carrosserie de véhicule et système de barre de torsion selon l'une quelconque des revendications précédentes, **caractérisés en ce que** la poutre transversale avant (9) et/ou les deux poutres longitudinales (7) comportent des points d'appui au niveau desquels le carter commun (43) peut être fixé avec ses deux points d'attache (45).

5. Carrosserie de véhicule et système de barre de torsion selon l'une quelconque des revendications précédentes, **caractérisés en ce que** la poutre transversale avant (9) fournit un premier cheminement de charges (F1) par lequel des forces de fonctionnement peuvent être introduites dans les poutres longitudinales (7) latérales de faux-châssis et **en ce que** le carter commun (43) fournit un deuxième cheminement de charges (F2) par lequel les forces de fonctionnement peuvent être introduites dans les poutres longitudinales (7).
